# EUROPÄISCHE PATENTSCHRIFT

(11) **EP 2 977 261 B1**
(45) Veröffentlichungstag und Bekanntmachung des Hinweises auf die Patenterteilung: **28.08.2019**
(21) Anmeldenummer: 14178199.7
(22) Anmeldetag: 23.07.2014
(51) Int. Cl.: B60P 3/20, B60H 1/00

(54) **Kühlaufbau eines Nutzfahrzeugs mit Temperiereinheit**
Cooling structure of a commercial vehicle with temperature control unit
Structure de refroidissement d'un véhicule utilitaire équipé d'une unité de régulation de température

(43) Veröffentlichungstag der Anmeldung: 27.01.2016
(73) Patentinhaber: Schmitz Cargobull AG, 48341 Altenberge (DE)
(72) Erfinder: Niewerth, Markus, 48683 Ahaus (DE); Flacke, Norbert, 45894 Gelsenkirchen (DE)
(74) Vertreter: Cohausz & Florack

(56) Entgegenhaltungen:
- DE-A1- 2 946 487
- DE-U1-202011 101 093
- US-A- 5 878 592
- US-B1- 6 945 865

## Beschreibung

Die Erfindung betrifft einen Kühlaufbau eines Nutzfahrzeugs, insbesondere Lastkraftwagens, Anhängers oder Sattelaufliegers, mit einem Wandelement oder Deckenelement, einer am Wandelement und/oder Deckenelement montierten und in einen Laderaum des Kühlaufbaus ragenden Temperiereinheit und einem in den Laderaum des Kühlaufbaus ragenden Schutzrahmen zum Schutz der Temperiereinheit, wobei die Temperiereinheit ein Gehäuse aufweist und der Schutzrahmen wenigstens im Wesentlichen außerhalb des Gehäuses vorgesehen ist. DE 202011101093 U1 offenbart einen gattungsgemäßen Kühlaufbau.

Unter Nutzfahrzeugen der genannten Art werden insbesondere solche verstanden, die zum Transport von Gütern im öffentlichen Straßenverkehr vorgesehen sind. Die Nutzfahrzeuge können selbst motorisch angetrieben sein, wie dies beispielsweise bei Lastkraftwagen der Fall ist. Die Nutzfahrzeuge können aber auch von motorisierten Zugmaschinen gezogen werden, und zwar beispielsweise als Anhänger oder als Sattelauflieger.

Zudem können Nutzfahrzeuge unterschiedliche Aufbauten tragen, die einen Laderaum umschließen. Zum Zwecke des Transports von temperaturempfindlichen Gütern bei niedrigen Temperaturen bieten sich Kühlaufbauten insbesondere mit festen Wänden und guten thermischen Dämmeigenschaften an. Kühlaufbauten eignen sich daher in gleicher Weise zum Transport von temperaturempfindlichen Gütern bei erhöhter Temperatur. Wenn die Umgebungstemperatur sehr niedrig ist, kann es erforderlich sein, den Laderaum zu wärmen, etwa um ein Einfrieren der Güter zu verhindern. Da die Anforderungen an die Dämmeigenschaften im Wesentlichen unabhängig davon sind, ob der Laderaum beheizt oder gekühlt wird, wird im Folgenden der Einfachheit halber stets von einem Kühlaufbau gesprochen, zumal Kühltransporte in den meisten Regionen häufiger sind als Transporte bei erhöhter Temperatur.

Kühlaufbauten sind beispielsweise als Kofferaufbauten ausgebildet und umfassen feste Seitenwände, eine feste Stirnwand, ein festes Dach und eine feste Rückwand, meist mit Rückwandtüren. Die Wände und das Dach werden dabei überwiegend aus Paneelen gebildet, die bezogen auf das Nutzfahrzeug eine innere Decklage und eine äußere Decklage aufweisen, die strukturgebende Eigenschaften haben und demnach entsprechend formstabil sind. Zwischen den Decklagen ist eine Kernlage mit geringem Wärmedurchgangskoeffizient vorgesehen, die in der Regel aus einem geschäumten Kunststoff, insbesondere Polyurethan, gebildet wird.

Zur Kühlung des Laderaums kommen Kühlgeräte in Frage, die an der Außenseite der Stirnwand des Kühlaufbaus aufgehängt sind. Es kommen aber auch Temperiereinheiten in Frage, die im Laderaum, insbesondere an der Unterseite des Dachs, montiert sind und den Laderaum sowohl kühlen als auch heizen können. Diese Temperiereinheiten können bedarfsweise von einem an der Stirnwand vorgesehenen Kühlgerät mit Kühlmittel und/oder Kältemittel versorgt werden. Dabei spricht man im Falle eines sensiblen Wärmeübergangs bei der Wärmeabgabe oder Wärmeaufnahme, bei dem keine Phasenumwandlung stattfindet, von Kühlmittel, während man im Falle eines latenten Wärmeübergangs, also mit Phasenumwandlung, von einem Kältemittel spricht.

Mit einer entsprechenden Temperiereinheit kann ein bestimmter Bereich des Laderaums gekühlt und/oder beheizt werden. Bei diesem Bereich kann es sich beispielsweise um einen über wenigstens eine Trennwand von wenigstens einem anderen Bereich des Laderaums abgetrennten Bereich des Laderaums handeln. Alternativ oder zusätzlich ist die Temperiereinheit als Verdampfer ausgebildet. Man spricht der bevorzugten Montage halber dann meist von Deckenverdampfern.

Anders als bei den an der Außenseite des Kühlaufbaus vorgesehenen Kühlgeräten ragen die Temperiereinheiten zumindest teilweise in den Laderaum hinein. Daher besteht die Gefahr, dass Stapler oder andere Fahrzeuge beim Beladen und/oder Entladen des Kühlaufbaus gegen die Temperiereinheiten stoßen und diese beschädigen. Um dies zu vermeiden werden Schutzrahmen vorgesehen, die um das Gehäuse der Temperiereinheiten herum angeordnet sind. Fahrzeuge, wie beispielsweise Stapler, stoßen dann gegen den Schutzrahmen und nicht gegen die Temperiereinheit. Da der Schutzrahmen weitaus stabiler ausgebildet ist als die Temperiereinheit, können Beschädigungen der Temperiereinheit vermieden werden. Allerdings wird der Laderaum, die Durchfahrtshöhe und/oder die Durchfahrtsbreite durch den Schutzrahmen weiter beschränkt als durch die Temperiereinheit ohnehin schon.

Daher liegt der vorliegenden Erfindung die Aufgabe zugrunde, den eingangs genannten und zuvor näher beschriebenen Kühlaufbau derart auszugestalten und weiterzubilden, dass der Laderaum weniger beschränkt und gleichzeitig die Temperiereinheit sicher vor Beschädigungen geschützt wird.

Diese Aufgabe ist bei einem Kühlaufbau nach dem Oberbegriff von Anspruch 1 dadurch gelöst, dass das Gehäuse wenigstens eine zum Laderaum offene Aussparung zur wenigstens teilweisen und wenigstens abschnittsweisen Aufnahme des Schutzrahmens aufweist und der Schutzrahmen wenigstens teilweise und wenigstens abschnittsweise in der Aussparung aufgenommen ist.

Auf diese Weise kann der Schutzrahmen wenigstens abschnittsweise und dort wenigstens teilweise in die Temperiereinheit bzw. in das Gehäuse der Temperiereinheit integriert werden, wodurch sich Bauraum einsparen lässt. Dies ist insbesondere dann der Fall, wenn der Schutzrahmen wenigstens abschnittsweise vollständig in der Aussparung aufgenommen ist. Die Integration in das Gehäuse meint dabei nicht, dass der Schutzrahmen im Gehäuse der Temperiereinheit angeordnet ist, sondern dass der Schutzrahmen wenigstens abschnittsweise und dort wenigstens teilweise in wenigstens einer Aussparung des Gehäuses aufgenommen ist. Wird diese wenigstens eine Aussparung noch zum Bereich des Gehäuses der Temperiereinheit hinzugerechnet, so ist der Schutzrahmen teilweise in diesem Bereich aufgenommen. Der Einfachheit und besseren Verständlichkeit halber wird in diesem Zusammenhang weiter davon gesprochen, dass der Schutzrahmen wenigstens teilweise in das Gehäuse der Temperiereinheit integriert ist, auch wenn dies sprachlich etwas ungenau sein sollte.

Der Laderaum, die Durchfahrtshöhe und/oder die Durchfahrtsbreite des Laderaums wird durch die Einheit aus Temperiereinheit und Schutzrahmen durch die wenigstens teilweise Integration desselben in das Gehäuse der Temperiereinheit weniger eingeschränkt. Ob die Durchfahrtshöhe und/oder die Durchfahrtsbreite günstig beeinflusst wird, hängt von der Integration des Schutzrahmens in das Gehäuse der Temperiereinheit und der Montage der Temperiereinheit am Deckenelement oder am Wandelement ab. Dabei kann trotz der wenigstens teilweisen Aufnahme des Schutzrahmens in der Aussparung des Gehäuses der Temperiereinheit der Schutzrahmen wenigstens überwiegend vom Gehäuse der Temperiereinheit beabstandet sein. Wenn der Schutzrahmen angefahren wird, kann dieser dann etwas nachgeben, ohne dadurch das Gehäuse der Temperiereinheit zu beschädigen.

Die wenigstens eine Aussparung kann so vorgesehen sein, dass der Schutzrahmen wenigstens teilweise in einer Umhüllenden der Temperiereinheit aus einander rechtwinklig schneidenden Ebenen aufgenommen ist. Die Ebenen können der Einfachheit halber beispielsweise mit dem Wandelement oder dem Deckenelement ein Rechteck bilden. Aber auch Ebenen, die entweder senkrecht und/oder parallel zum Wandelement oder Deckenelement vorgesehen sind, können die Umhüllende bilden. Dabei grenzen die Ebenen der Umhüllenden vorzugsweise jeweils von außen an einen Teil des Gehäuses der Temperiereinheit an.

Bei der Temperiereinheit handelt es sich vorzugsweise um eine Einheit, die wahlweise sowohl zur Heizung also auch Kühlung des Laderaums eingesetzt werden kann. Dies ermöglicht eine hohe Flexibilität hinsichtlich des Einsatzes der Temperiereinheit. Wenn diese Flexibilität nicht erforderlich ist, dann es sich bei der Temperiereinheit bedarfsweise auch um eine Kühleinheit oder eine Heizeinheit handeln, die dementsprechend lediglich der Kühlung bzw. lediglich dem Beheizen des Laderaums dient. In Bezug auf die Anordnung des Schutzrahmens ist die entsprechende Funktion der Temperiereinheit aber grundsätzlich ohnehin eher zweitrangig.

Bei einer ersten bevorzugten Ausgestaltung des Kühlaufbaus wird die Aussparung als Freiraum zwischen dem Gehäuse und wenigstens zwei an das Gehäuse grenzenden und sich zudem schneidenden Ebenen definiert. Dies erlaubt eine platzsparende Integration des Schutzrahmens in das Gehäuse der Temperiereinheit. Diese kann in besonders einfacher Weise in wenigstens einem Eckbereich und/oder wenigstens einem Randbereich des Gehäuses der Temperiereinheit erfolgen.

Dabei bietet es sich zur einfachen und effektiven Integration des Schutzrahmens in das Gehäuse der Temperiereinheit insbesondere an, wenn wenigstens eine Ebene durch eine im Laderaum vorgesehene Seitenwand des Gehäuses definiert wird. Alternativ oder zusätzlich kann aus demselben Grund eine Ebene durch eine im Laderaum vorgesehene Unterseite oder Vorderseite des Gehäuses definiert sein. Die wenigstens eine Ebene grenzt also an eine Seitenwand, eine Vorderseite oder eine Unterseite des Gehäuses der Temperiereinheit an und ist zudem vorzugsweise im Wesentlichen parallel zu dieser Wand bzw. Seite ausgerichtet. Dies kommt auch einer bevorzugten etwa rechteckigen Ausgestaltung des Gehäuses der Temperiereinheit entgegen.

Weiter bevorzugt ist es, wenn die wenigstens eine Ebene senkrecht zum Wandelement oder Deckenelement ausgerichtet ist und/oder dass eine Ebene parallel zum Wandelement oder Deckenelement ausgerichtet ist. Dann kann eine günstige Form des Gehäuses der Temperiereinheit bereitgestellt und zudem sehr platzsparend der Schutzrahmen in das Gehäuse integriert werden. Dies kann bei einfach herzustellenden Temperiereinheiten umso mehr gelten, wenn die wenigstens zwei Ebenen einander im Wesentlichen rechtwinklig schneiden. Letztlich kann bedarfsweise eine rechteckige Umhüllende aus sich rechtwinklig schneidenden und zur Längsrichtung und zur Querrichtung des Laderaums ausgerichteten Ebenen gedacht werden, die zwischen sich und dem Gehäuse wenigstens eine Aussparung aufweist in der der Schutzrahmen wenigstens teilweise platzsparend aufgenommen ist.

Um den zur Verfügung stehenden Raum bestmöglich ausnutzen und damit die Abmessungen der Einheit aus Temperiereinheit und Schutzrahmen insgesamt möglichst gering ausbilden zu können, kann es sich anbieten, wenn die Aussparung in Form einer Aufnahme ausgebildet ist. Unter einer geeigneten Aufnahme kann dabei insbesondere eine solche verstanden werden, die wenigstens teilweise an die Form des wenigstens teilweise aufgenommen Teils des Schutzrahmens angepasst ist. Dabei hat es sich grundsätzlich als besonders effizient erwiesen, wenn die Aufnahme nutförmig ausgebildet ist.

Der Schutzrahmen kann einfach und damit platzsparend ausgebildet werden, wenn dieser wenigsten einen Bügel aufweist, der zur einfachen und effizienten Ausgestaltung eine im Wesentlichen U-förmige Form aufweisen kann. Dabei bietet es sich der Einfachheit halber an, wenn der wenigstens eine Bügel wenigstens teilweise in der wenigstens einen Aussparung aufgenommen ist.

Um einen effektiven und platzsparenden Schutzrahmen bilden zu können, kann es zweckmäßig sein, wenn im Bereich wenigstens einer Längskante und/oder einer Querkante des Gehäuses der Temperiereinheit wenigstens eine Traverse vorgesehen ist. Dabei kann die Traverse vorzugsweise zur Stabilisierung des Schutzrahmens und zum gleichzeitigen Schutz des Gehäuses die Längskante und/oder Querkante desselben seitlich abdecken bzw. überdecken. Die Längskante und/oder Querkante kann dann von einem Fahrzeug nicht angefahren werden, ohne zuvor gegen die Traverse zu stoßen, wodurch vorzugsweise soviel Energie abgeleitet wird, dass das Gehäuse durch den Zusammenstoß des Fahrzeugs mit der entsprechenden Stelle des Schutzrahmens keinen Schaden nimmt.

Der Einfachheit halber und zur besseren Aussteifung des Schutzrahmens bietet es sich dabei an, wenn die Traverse zwei auf gegenüberliegenden Seiten des Gehäuses vorgesehene Bügel des Schutzrahmens miteinander verbindet. Die wenigstens eine Traverse und der wenigstens eine Bügel können dann ohne nennenswerte weitere Bauteile die Struktur des Schutzrahmens bilden.

Um den Schutzrahmen und die Temperiereinheit mechanisch zu entkoppeln, so dass das Gehäuse der Temperiereinheit besser vor Beschädigungen geschützt und der Schutzrahmen im Falle von Beschädigungen leichter ausgetauscht werden kann, können der
Schutzrahmen und die Temperiereinheit separat mit dem Wandelement und/oder dem Deckenelement verbunden sein. Zum Zwecke einer einfachen Montage und Demontage kommen hierbei insbesondere Verschraubungen in Frage.

Alternativ oder zusätzlich kann der Schutzrahmen, die Temperiereinheit oder beide in einem Schienensystem des Deckenelements oder des Wandelements montiert sein. In diesem Falle können die beim Anstoßen an den Schutzrahmen auf den Schutzrahmen übertragenen Kräfte zuverlässiger an das Deckenelement oder an das Wandelement abgeleitet werden, ohne dass dies zu einer Beschädigung des Deckenelements oder des Wandelements führt. Die entsprechende Montage der Temperiereinheit hat den Vorteil, dass auch schwere Temperiereinheiten einfach und mit wenigen Verbindungen sicher am Deckenelement oder am Wandelement befestigt werden können. Dabei bietet es sich der Einfachheit und der Flexibilität hinsichtlich des Montageorts der Temperiereinheit besonders an, wenn das Schienensystem aus parallelen Schienen gebildet wird. Dabei können sich die Temperiereinheit und der Schutzrahmen bedarfsweise wenigstens eine Schiene zur Montage teilen bzw. die Temperiereinheit und der Schutzrahmen wenigstens teilweise in denselben Schienen montiert sein. Dies kann in einfacher Weise erfolgen, indem der Schutzrahmen über wenigstens jeweils zwei Verbindungen in zwei Schienen gehalten wird, während die Temperiereinheit in denselben Schienen ebenfalls über jeweils wenigstens zwei Verbindungen gehalten wird. Alternativ oder zusätzlich erlaubt das Schienensystem eine leichte Verschiebbarkeit der Temperiereinheit und des Schutzrahmens, um den Montageort problemlos verändern zu können.

Die zuvor beschriebenen Vorteile und Ausführungsformen kommen insbesondere dann zum Tragen, wenn es sich bei dem Kühlaufbau um einen Kofferaufbau handelt. Bei diesen Aufbauten ist die Größe des Laderaums festgelegt und sind Temperiereinheiten zur Kühlung wenigstes von Teilbereichen des Laderaums von besonderem Interesse.

Alternativ oder zusätzlich kann das Wandelement und/oder das Deckenelement als Paneelelement mit strukturgebenden äußeren Decklagen und einer dazwischen vorgesehenen Kernlage gebildet sein. Die Decklagen können einlagig oder mehrlagig aufgebaut und wenigstens teilweise aus Kunststoff, insbesondere faserverstärktem Kunststoff, und/oder Metall, insbesondere Stahl und/oder Aluminium, gebildet sein. Die Decklagen ermöglichen eine sichere Montage der Temperiereinheit und des Schutzrahmens bei gleichzeitig zufriedenstellender thermischer Dämmung des Laderaums. Letzteres gilt insbesondere, wenn die Kernlage aus geschäumtem Kunststoff, wie beispielsweise Polyurethan, gebildet wird.

Zur einfachen Kühlung des Laderaums kann die Temperiereinheit wenigstens einen Ventilator und wenigstens eine dem Ventilator zugeordneten Öffnung im Gehäuse aufweisen, durch die Luft in das Gehäuse der Temperiereinheit gefördert wird. Die Luft kann nach erfolgter Temperaturabsenkung durch Wärmetausch mit einer Wärmetauschereinheit durch eine andere Öffnung wieder in den Laderaum geleitet werden. Zur effizienten Kühlung handelt es sich bei der Temperiereinheit vorzugsweise um einen Verdampfer. Dieser ist zudem recht groß und anfällig gegenüber mechanischen Beanspruchungen von außen, weshalb die zuvor beschriebenen Vorteile in diesem Falle besondere Geltung erlangen.

Alternativ oder zusätzlich kann der Schutzrahmen insbesondere als Anfahrschutz ausgebildet sein. Dies verlangt nach einer besonders robusten und damit im Prinzip ausladenden Ausgestaltung des Schutzrahmens. Das Bedürfnis nach einer platzsparenden Ausgestaltung der Einheit aus Schutzrahmen und Gehäuse der Temperiereinheit ist in diesem Fall daher besonders ausgeprägt.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Kühlaufbau in einer perspektivischen Ansicht,
- Fig. 2: die Einheit aus Temperiereinheit und Schutzrahmen des Kühlaufbaus aus Fig. 1 in einer perspektivischen Ansicht,
- Fig. 3: die Temperiereinheit aus Fig. 2 in perspektivischer Ansicht,
- Fig. 4: der Schutzrahmen aus Fig. 2 in perspektivischer Ansicht,
- Fig. 5: die Einheit aus Temperiereinheit und Schutzrahmen aus Fig. 2 in schematischer Schnittansicht entlang der Schnittebene V-V aus Fig. 2 und
- Fig. 6: die Einheit aus Temperiereinheit und Schutzrahmen aus Fig. 2 in schematischer Schnittansicht entlang der Schnittebene VI-VI aus Fig. 5.

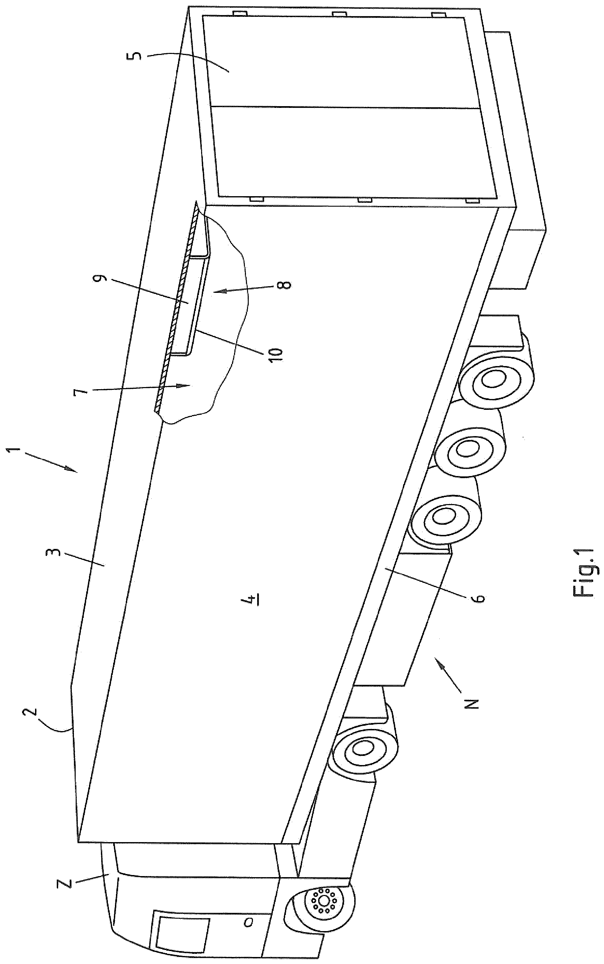

In der Fig.1 ist ein von einer Zugmaschine Z gezogenes Nutzfahrzeug N in Form eines Sattelaufliegers mit einem Kühlaufbau 1 in Form eines Kofferaufbaus dargestellt. Der dargestellte und insoweit bevorzugte Kühlaufbau 1 weist ein Stirnwandelement 2, ein Deckenelement 3, zwei seitliche Wandelemente 4 und eine Rückwand 5 auf, die zusammen mit dem Boden 6 einen Laderaum 7 umschließen. Das Stirnwandelement 2, das Deckenelement 3 und die seitlichen Wandelemente 4 werden durch Paneele gebildet, die eine nach außen weisende äußere Decklage und eine zum Laderaum 7 weisende innere Decklage aufweisen. Die Decklagen sind formstabil und wirken daher strukturgebend. Dabei können die Decklagen bedarfsweise selbst als mehrlagiges Sandwichelement aufgebaut sein. Zwischen den Decklagen ist beim dargestellten und insoweit bevorzugten Kühlaufbau eine Kernlage aus einem geschäumten Kunststoff, insbesondere in Form von Polyurethan vorgesehen, die einen geringen Wärmedurchgangskoeffizient bereitstellt.

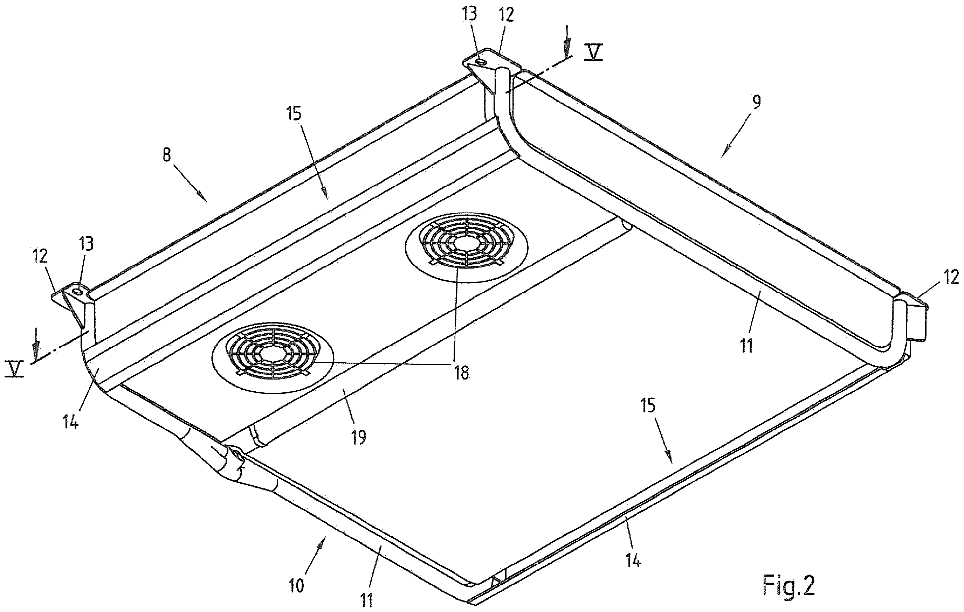

Beim dargestellten und insoweit bevorzugten Kühlaufbau 1 ist am Deckenelement 3 eine Temperiereinheit 8 in Form eines Verdampfers montiert. Bedarfsweise könnte die Temperiereinheit 8 auch an einem Wandelement 4 montiert sein. Am Deckenelement 3 montiert stört die Temperiereinheit 8 aber normalerweise das Be- und Entladen des Laderaums 7 weniger. Die Temperiereinheit 8 wird nach außen durch ein Gehäuse 9 abgeschlossen, das seinerseits von einem Schutzrahmen 10 umgeben ist, wie dies in der Fig. 2 dargestellt ist. Der Schutzrahmen 10 trägt der Gefahr Rechnung, dass ein Fahrzeug, wie etwa ein Stapler, beim Be- und Entladen des Laderaums 7 gegen die Temperiereinheit 8 stößt und die Temperiereinheit 8 dadurch beschädigt. Beim dargestellten und insoweit bevorzugten Kühlaufbau 1 ist der Schutzrahmen 10 vom Gehäuse 9 der Temperiereinheit 8 entkoppelt und vom Gehäuse 9 beabstandet. Die Temperiereinheit 8 und der Schutzrahmen 10 sind zudem jeweils separat am Deckenelement 3 montiert. Dies kann beispielsweise über nicht dargestellte Schraubverbindungen erfolgen.

Beim dargestellten und insoweit bevorzugten Kühlaufbau 1 sind der Schutzrahmen 10 und die Temperiereinheit 8 in einem im Deckenelement 3 vorgesehenen Schienensystem montiert, das ebenfalls nicht dargestellt ist. Das Schienensystem umfasst dabei wenigstens zwei parallele Schienen, wobei die Temperiereinheit 8 und der Schutzrahmen 10 in den beiden Schienen jeweils über wenigstens zwei Verbindungen pro Schiene gehalten sind. Die Verbindungen sind dabei so ausgebildet, dass diese ein Verschieben der Temperiereinheit 8 und des Schutzrahmens 10 erlauben, ohne die Verbindungen vollständig lösen zu müssen. Die Verbindungen verhindern jedoch im gefügten Zustand ein versehentliches Verschieben der Temperiereinheit 8 und des Schutzrahmens 10 entlang der Schienen.

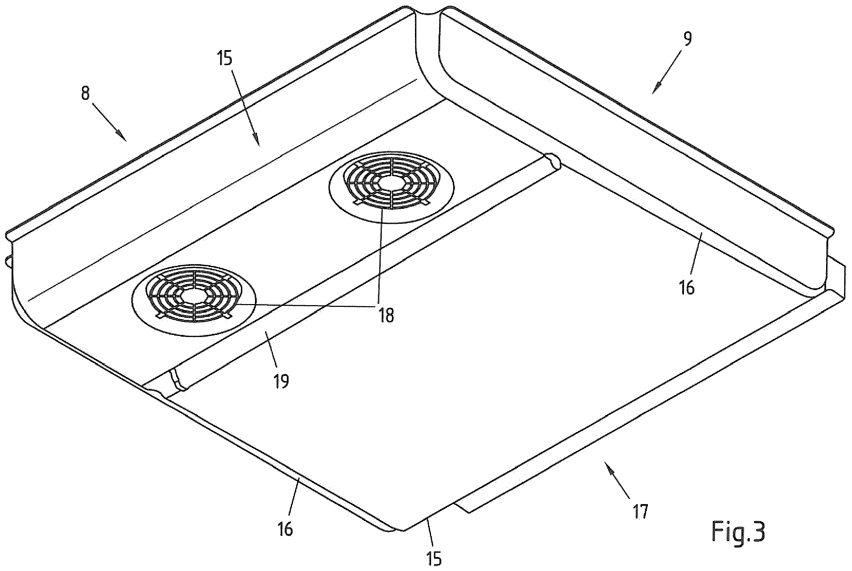

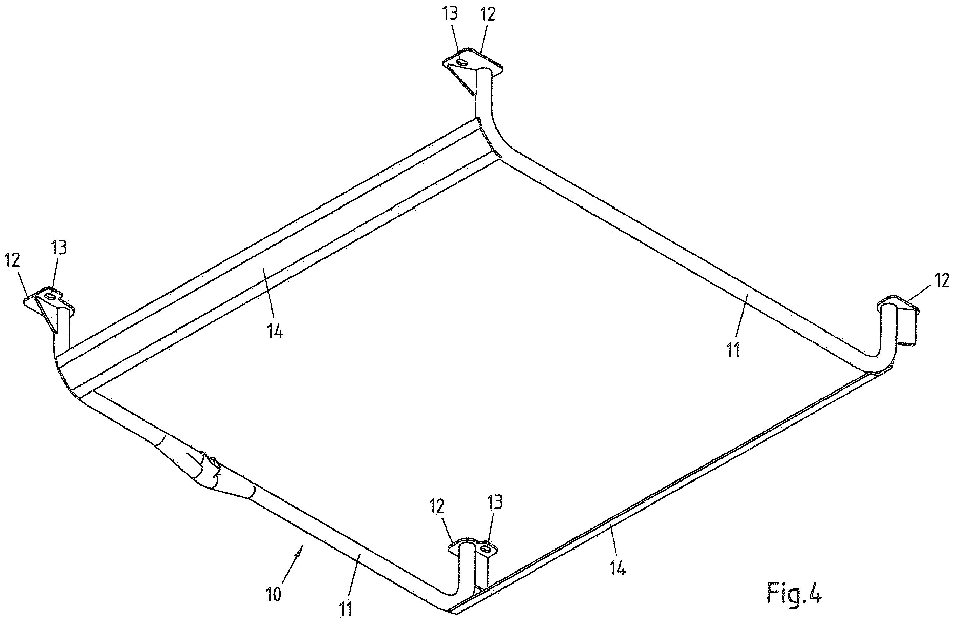

In der Fig. 3 und 4 sind das Gehäuse 9 der Temperiereinheit 8 und der Schutzrahmen 10 jeweils separat dargestellt. Der Schutzrahmen 10 weist dabei zwei aus Rohren gebildete und etwa parallel zueinander angeordnete Bügel 11 auf, die im Wesentlichen U-förmig ausgebildet sind. An den freien Enden der Bügel 11 sind Anschlussplatten 12 mit Montageeinrichtungen 13 vorgesehen. Beim dargestellten und insoweit bevorzugten Schutzrahmen 10 sind an den Anschlussplatten 12 Öffnungen zur Aufnahme von nicht dargestellten Verbindungsmitteln vorgesehen, über welche die Montage des Schutzrahmens 10 am Schienensystem des Deckenelements 3 erfolgen kann. Die beiden Bügel 11 sind in gebogenen Abschnitten der Bügel 11 untereinander über zwei Traversen 14 an gegenüberliegenden Seiten des Schutzrahmens 10 miteinander verbunden. Die Traversen 14 des dargestellten und insoweit bevorzugten Kühlaufbaus 1 werden aus einem gekrümmten Profil gebildet.

Die Traversen 14 decken im montierten Zustand des Schutzrahmens 10 gegenüberliegende Längs- oder Querkanten 15 des Gehäuses der Temperiereinheit ab, um diese gegen Stöße von außen zu schützen. Bedarfsweise könnte das Gehäuse 9 der Temperiereinheit 8 Aussparungen aufweisen, in die die Traversen 14 eingelassen sind. Dies ist beim dargestellten und insoweit bevorzugten Gehäuse 9 aber nicht der Fall, da die Traversen 14 flach, insbesondere aus einem Flachmaterial gefertigt, sind. Die durch entsprechende Aussparungen im Gehäuse 9 erzielbare Verringerung des Bauraums ist also verhältnismäßig gering.

Anders verhält es sich mit den Bügeln 11 des Schutzrahmens 10. Diese sind nämlich abschnittsweise wenigstens teilweise in Aussparungen 16 des Gehäuses 9 aufgenommen. Die Aussparungen 16 erstrecken sich an den gegenüberliegenden und den Bügeln 11 zugeordneten Seitenkanten des Gehäuses 9 der Temperiereinheit 8, von einem Ende des Gehäuses 9 bis zum gegenüberliegenden Ende des Gehäuses 9. Die Aussparungen 16 sind dabei in ihrer Form an die Form der Profile angepasst, aus denen die Bügel 11 gebildet sind. Damit sind die Aussparungen 16 im Querschnitt quer zu den Bügeln 11 gesehen nutförmig ausgebildet und bilden durch die Anpassung der Form der Aussparung 16 an die Form des angrenzenden Bereichs des Schutzrahmens 10 eine Aufnahme zur wenigstens teilweisen Aufnahme des Bügels 11.

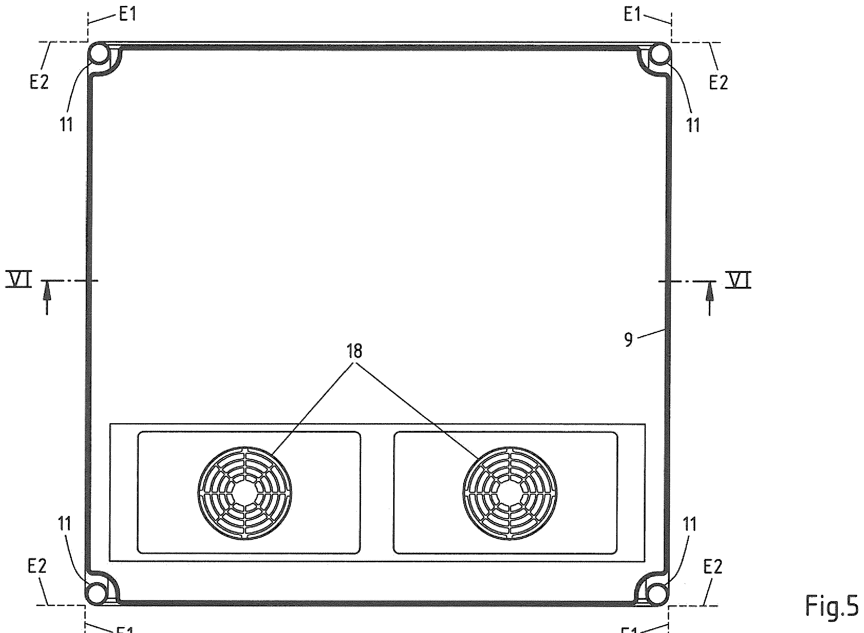

Die Einheit aus Schutzrahmen 10 und Gehäuse 9 der Temperiereinheit 8 ist in der Fig. 5 in einer Schnittebene parallel zum Deckenelement 3 dargestellt. Die im Gehäuse 9 angeordneten Bauteile der Temperiereinheit 8 sind der besseren Übersichtlichkeit halber nicht dargestellt worden. Der Bereich der Aussparungen 16 ergibt sich dabei jeweils durch den Freiraum zwischen dem Gehäuse 9 der Temperiereinheit 8 und zwei zueinander senkrecht stehenden Ebenen E1,E2, die jeweils an einander angrenzenden Seiten des Gehäuses 9 angrenzen. Dabei sind die beiden zugehörigen Ebenen E1,E2 zudem senkrecht zum Deckenelement 3 ausgerichtet. Hinzu kommt, dass beim dargestellten und insoweit bevorzugten Kühlaufbau 1 eine Ebene E1 in Querrichtung des Kühlaufbaus 1 und eine Ebene E2 in Längsrichtung des Kühlaufbaus 1 verläuft.

Die Lage der an die Seiten angrenzenden Ebenen E1,E2 wird beim dargestellten und insoweit bevorzugten Kühlaufbau 1 nicht durch den am weitesten nach außen abstehenden Teil des Gehäuses 9 der entsprechenden Seite der Temperiereinheit 8 gebildet. Die Ebene E1,E2 grenzt vielmehr an den Teil des Gehäuses 9 an, der den überwiegenden Teil der Seitenwand, insbesondere in Ausrichtung der jeweiligen Ebene E1,E2 bildet, obwohl dies ebenfalls denkbar und bedarfsweise bevorzugt ist. Wenn kein solcher Teil existiert, kann die Lage der Ebene E1,E2 durch den flächenmäßig größten Teil der Seitenwand gebildet werden, der eben ausgebildet ist. Dieser Teil kann dann weniger als 50% der Fläche der entsprechenden Seitenwand ausmachen. Dies ist insbesondere der Fall, wenn der weiter nach außen vorstehende Teil des Gehäuses 9 nahe des Deckenelements 3 vorgesehen ist. Dort ist die Gefahr eines Zusammenstoßes mit der Temperiereinheit 8 beim Be- und Entladen des Laderaums 7 mit einem Stapler oder dergleichen ohnehin geringer.

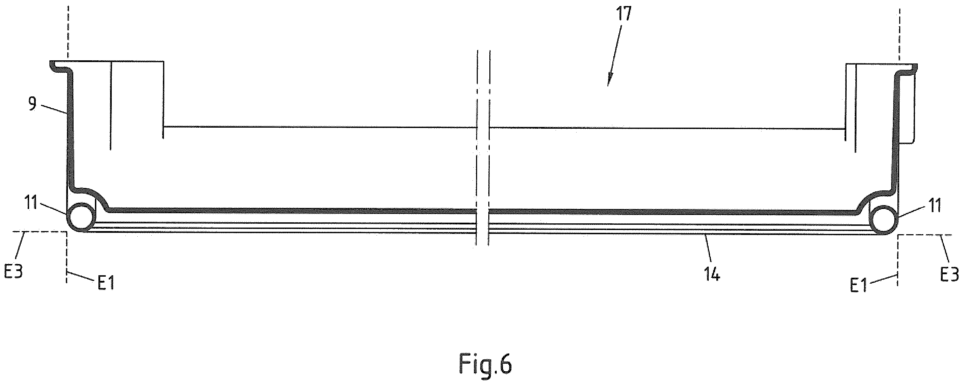

Die Einheit aus Schutzrahmen 10 und Gehäuse 9 der Temperiereinheit 8 ist in der Fig. 6 in einer Schnittebene senkrecht zum Deckenelement 3 und zu den Bügeln 11 des Schutzrahmens 10 dargestellt. Die im Gehäuse 9 angeordneten Bauteile der Temperiereinheit 8 sind der besseren Übersichtlichkeit halber wie schon in der Fig. 5 weggelassen worden. Im rückwärtigen Bereich des Gehäuses 9 ist das Gehäuse 9 deutlich beabstandet vom Deckenelement 3, wodurch eine Öffnung 17 geschaffen wird, durch die in der Temperiereinheit 8 gekühlte Luft, die zuvor über Ventilatoren und Eintrittsöffnungen 18 in das Gehäuse 9 eingesogen worden ist, wider in den Laderaum 7 austreten kann.

Der Bereich der Aussparungen 16 wird auch in diesem Falle jeweils durch den Freiraum zwischen dem Gehäuse 9 der Temperiereinheit 8 und jeweils zwei sich rechtwinklig schneidenden Ebenen E1,E3 gebildet. Von den beiden Ebenen E1,E3 ist eine Ebene E3 parallel zum Deckenelement 3 und eine Ebene E1 senkrecht zum Deckenelement 3 ausgerichtet. Die senkrecht verlaufende Ebene E1 ist wie bereits beschrieben angrenzend zur Seitenwand des Gehäuses 9 angeordnet, während die andere Ebene E3 angrenzend zur Unterseite des Gehäuses 9 der Temperiereinheit 8 angeordnet ist. Auch wird die Lage der an die Unterseite angrenzenden Ebene E3 nicht durch den Teil der Unterseite des Gehäuses 9 gebildet, der am weitesten nach unten ragt. Zwar ist es grundsätzlich bevorzugt, wenn der Schutzrahmen 10 wenigstens so weit nach unten ragt wie das Gehäuse 9. Allerdings können dennoch Teilbereiche des Gehäuses 9 weiter nach unten ragen als der Schutzrahmen 10.

Beim dargestellten und insoweit bevorzugten Kühlaufbau 1 handelt es sich bei diesem Teilbereich um den Teilbereich 19 zur Aufnahme einer Kondensatleitung, die der Abfuhr des Kondensats aus der Temperiereinheit 8 dient. Die Schnittebene der Fig. 6 ist beim dargestellten und insoweit bevorzugten Kühlaufbau 1 in einem Bereich eines ebene Teils der Unterseite des Gehäuses 9 der Temperiereinheit 8 vorgesehen, der den überwiegenden Teil der Unterseite des Gehäuses 9 bildet. Dies ist aber keineswegs zwingend. Es kann sich auch um den großflächigen und ebenen Teil der Unterseite des Gehäuses 9 handeln, der am weitesten unten angeordnet ist. Dies ist beim vorliegenden Kühlaufbau 1 ebenfalls der Fall.

In dem Bereich zwischen dem Gehäuse 9 und den entsprechend definierten Ebenen E1,E3 ist die Schutzrahmen 10 im parallel zum Deckenelement 3 ausgebildeten Bereich der Bügel 11, also nur abschnittsweise, zum Teil aufgenommen. Der Schutzrahmen 10 erstreckt sich weiter nach unten als dies der Fall wäre, wenn der Schutzrahmen 10 im entsprechenden Abschnitt gänzlich in der Aussparungen 16 gemäß Fig. 6 aufgenommen wäre, aber weniger als wenn keine Aussparungen 16 vorgesehen wären. Beim dargestellten und insoweit bevorzugten Kühlaufbau 1 ist die Temperiereinheit 8 besonders gut geschützt, da hier die nach unten ragenden Teile des Gehäuses 9 sind.

Im Falle der Montage der Temperiereinheit an einem Wandelement, würde die zuvor beschriebene Unterseite als die Vorderseite angesehen werden. Der tatsächlich nach unten weisende Teil des Gehäuses würde in diesem Fall zudem lediglich als Seitenwand angesehen. Grundsätzlich gelten aber auch in diesem Fall die zuvor beschriebenen Prinzipien und Grundsätze. Lediglich die Einbaulage der Temperiereinheit und des Schutzrahmens weicht relativ zum Kühlaufbau entsprechend ab. Auf die Ausgestaltung der Temperiereinheit und des Schutzrahmens muss dies jedoch keinen nennenswerten Einfluss haben.

## Patentansprüche

1. Kühlaufbau (1) eines Nutzfahrzeugs (N), insbesondere Lastkraftwagens, Anhängers oder Sattelaufliegers, mit einem Wandelement (4) und/oder Deckenelement (3), einer am Wandelement (4) oder Deckenelement (3) montierten und in einen Laderaum (7) des Kühlaufbaus (1) ragenden Temperiereinheit (8) und einem in den Laderaum (7) des Kühlaufbaus (1) ragenden Schutzrahmen (10) zum Schutz der Temperiereinheit (8), wobei die Temperiereinheit (8) ein Gehäuse (9) aufweist und der Schutzrahmen (10) wenigstens im Wesentlichen außerhalb des Gehäuses (9) vorgesehen ist,
**dadurch gekennzeichnet, dass**
das Gehäuse (9) wenigstens eine zum Laderaum (7) offene Aussparung (16) zur wenigstens teilweisen und wenigstens abschnittsweisen Aufnahme des Schutzrahmens (10) aufweist und der Schutzrahmen (10) wenigstens teilweise und wenigstens abschnittsweise in der Aussparung (16) aufgenommen ist.

2. Kühlaufbau nach Anspruch 1,
**dadurch gekennzeichnet, dass**
Aussparung (16) definiert als Freiraum zwischen dem Gehäuse (9) und wenigstens zwei an das Gehäuse (9) grenzenden und sich schneidenden Ebenen (E1,E2,E3).

3. Kühlaufbau nach Anspruch 2,
**dadurch gekennzeichnet, dass**
wenigstens eine Ebene (E1,E2) durch eine im Laderaum (7) vorgesehene Seitenwand des Gehäuses (9) definiert wird und/oder dass eine Ebene (E3) durch eine im Laderaum vorgesehene Unterseite oder Vorderseite des Gehäuses (9) definiert wird.

4. Kühlaufbau nach Anspruch 2 oder 3,
**dadurch gekennzeichnet, dass**
wenigstens eine Ebene (E1,E2) senkrecht zum Wandelement (4) oder Deckenelement (3) ausgerichtet ist und/oder dass eine Ebene (E3) parallel zum Wandelement (4) oder Deckenelement (3) ausgerichtet ist.

5. Kühlaufbau nach einem der Ansprüche 2 bis 4,
**dadurch gekennzeichnet, dass**
die wenigstens zwei Ebenen (E1,E2,E3) einander im Wesentlichen rechtwinklig schneiden.

6. Kühlaufbau nach einem der Ansprüche 1 bis 5,
**dadurch gekennzeichnet, dass**
die Aussparung (16) in Form einer, vorzugsweise nutförmigen, Aufnahme ausgebildet ist.

7. Kühlaufbau nach einem der Ansprüche 1 bis 6,
**dadurch gekennzeichnet, dass**
der Schutzrahmen (10) wenigsten einen, vorzugsweise im Wesentlichen U-förmigen, Bügel (11) aufweist und dass der wenigstens eine Bügel (11) wenigstens teilweise in der wenigstens einen Aussparung (16) aufgenommen ist.

8. Kühlaufbau nach einem der Ansprüche 1 bis 7,
**dadurch gekennzeichnet, dass**
im Bereich wenigstens einer Längskante und/oder einer Querkante (15) wenigstens eine Traverse (14), vorzugsweise die Längskante und/oder Querkante (15) des Gehäuses (9) der Temperiereinheit (8) seitlich abdeckend, vorgesehen ist.

9. Kühlaufbau nach Anspruch 8,
**dadurch gekennzeichnet, dass**
die Traverse (14) zwei gegenüberliegenden Seiten des Gehäuses (9) zugeordnete Bügel (11) des Schutzrahmens (10) miteinander verbindet.

10. Kühlaufbau nach einem der Ansprüche 1 bis 9,
**dadurch gekennzeichnet, dass**
der Schutzrahmen (10) und die Temperiereinheit (8) separat mit dem Wandelement (4) und/oder dem Deckenelement (3) verbunden, insbesondere verschraubt, sind.

11. Kühlaufbau nach einem der Ansprüche 1 bis 10,
**dadurch gekennzeichnet, dass**
der Schutzrahmen (10) und/oder die Temperiereinheit (8) in einem Schienensystem des Deckenelements (3) oder Wandelements (4) montiert ist.

12. Kühlaufbau nach einem der Ansprüche 1 bis 11,
**dadurch gekennzeichnet, dass**
der Kühlaufbau (1) in Form eines Kofferaufbaus ausgebildet ist.

13. Kühlaufbau nach einem der Ansprüche 1 bis 12,
**dadurch gekennzeichnet, dass**
das Wandelement (4) und/oder das Deckenelement (3) als Paneelelement mit strukturgebenden äußeren Decklagen und einer dazwischen vorgesehenen Kernlage, insbesondere aus geschäumtem Kunststoff, gebildet wird.

14. Kühlaufbau nach einem der Ansprüche 1 bis 13,
**dadurch gekennzeichnet, dass**
die Temperiereinheit (8) als Verdampfer ausgebildet ist.

15. Kühlaufbau nach einem der Ansprüche 1 bis 14,
**dadurch gekennzeichnet, dass**
der Schutzrahmen (10) als Anfahrschutz ausgebildet ist.

## Claims

1. Refrigerated vehicle body (1) of a commercial vehicle (N), in particular a lorry, trailer or semitrailer, having a wall element (4) and/or ceiling element (3), a temperature control unit (8) mounted on the wall element (4) or ceiling element (3) and projecting into a loading space (7) of the refrigerated vehicle body (1), and a protective frame (10) projecting into the loading space (7) of the refrigerated vehicle body (1) for protecting the temperature control unit (8), wherein the temperature control unit (8) has a housing (9) and the protective frame (10) is provided at least substantially outside the housing (9),
**characterised in that**
the housing (9) has at least one recess (16) open to the loading space (7) for receiving the protective frame (10) at least partially and at least in sections, and the protective frame (10) is incorporated in the recess (16) at least partially and at least in sections.

2. Refrigerated vehicle body according to Claim 1,
**characterised in that**
recess (16) is defined as a free space between the housing (9) and at least two planes (E1, E2, E3) adjacent to the housing (9) and intersecting each other.

3. Refrigerated vehicle body according to Claim 2,
**characterised in that**
at least one plane (E1, E2) is defined by a side wall of the housing (9) provided in the loading space (7) and/or **in that** one plane (E3) is defined by an underside or front side of the housing (9) provided in the loading space.

4. Refrigerated vehicle body according to Claim 2 or 3,
**characterised in that**
at least one plane (E1, E2) is aligned perpendicular to the wall element (4) or ceiling element (3) and/or **in that** one plane (E3) is aligned parallel to the wall element (4) or ceiling element (3).

5. Refrigerated vehicle body according to any one of Claims 2 to 4,
**characterised in that**
the at least two planes (E1, E2, E3) intersect each other substantially at right angles.

6. Refrigerated vehicle body according to any one of Claims 1 to 5,
**characterised in that**
the recess (16) is configured in the form of a preferably groove-shaped receptacle.

7. Refrigerated vehicle body according to any one of Claims 1 to 6,
**characterised in that**
the protective frame (10) has at least one preferably substantially U-shaped bracket (11) and **in that** the at least one bracket (11) is at least partially incorporated in the at least one recess (16).

8. Refrigerated vehicle body according to any one of Claims 1 to 7,
**characterised in that**
in the region of at least one longitudinal edge and/or one transverse edge (15) at least one crossmember (14) is provided, preferably laterally covering the longitudinal edge and/or transverse edge (15) of the housing (9) of the temperature control unit (8).

9. Refrigerated vehicle body according to Claim 8,
**characterised in that**
the crossmember (14) connects two brackets (11) of the protective frame (10) associated with two opposite sides of the housing (9).

10. Refrigerated vehicle body according to any one of Claims 1 to 9,
**characterised in that**
the protective frame (10) and the temperature control unit (8) are separately connected, in particular screwed, to the wall element (4) and/or the ceiling element (3).

11. Refrigerated vehicle body according to any one of Claims 1 to 10,
**characterised in that**
the protective frame (10) and/or the temperature control unit (8) are mounted in a rail system of the ceiling element (3) or wall element (4).

12. Refrigerated vehicle body according to any one of Claims 1 to 11,
**characterised in that**
the refrigerated vehicle body (1) is designed in the form of a box body.

13. Refrigerated vehicle body according to any one of Claims 1 to 12,
**characterised in that**
the wall element (4) and/or the ceiling element (3) are formed as a panel element with structuring outer cover layers and a core layer provided therebetween, in particular made of foamed plastic.

14. Refrigerated vehicle body according to any one of Claims 1 to 13,
**characterised in that**
the temperature control unit (8) is designed as an evaporator.

15. Refrigerated vehicle body according to any one of Claims 1 to 14,
**characterised in that**
the protective frame (10) is designed as collision protection.

## Revendications

1. Carrosserie frigorifique (1) d'un véhicule utilitaire (N), notamment d'un camion, d'une remorque ou d'une semi-remorque, comprenant un élément formant paroi (4) et/ou un élément formant plafond (3), une unité de contrôle de température (8) montée sur l'élément formant paroi (4) ou l'élément formant plafond (3) et faisant saillie dans un espace de chargement (7) de la carrosserie frigorifique (1) et un cadre de protection (10) faisant saillie dans l'espace de chargement (7) de la carrosserie frigorifique (1) et servant à protéger l'unité de contrôle de température (8), l'unité de contrôle de température (8) possédant un caisson (9) et le cadre de protection (10) se trouvant au moins sensiblement à l'extérieur du caisson (9), **caractérisée en ce que** le caisson (9) possède au moins une cavité (16) ouverte vers l'espace de chargement (7) et servant à accueillir le cadre de protection (10) au moins partiellement et au moins par sections et que le cadre de protection (10) est accueilli au moins partiellement et au moins par sections dans la cavité (16).

2. Carrosserie frigorifique selon la revendication 1, **caractérisée en ce que** la cavité (16) est définie comme un espace libre entre le caisson (9) et au moins deux plans (E1, E2, E3) qui sont délimités au niveau du caisson (9) et qui se croisent.

3. Carrosserie frigorifique selon la revendication 2, **caractérisée en ce qu'**au moins un plan (E1, E2) est défini par une paroi latérale du caisson (9) qui se trouve dans l'espace de chargement (7) et/ou **en ce qu'**un plan (E3) est défini par un côté inférieur ou un côté avant du caisson (9) qui se trouve dans l'espace de chargement.

4. Carrosserie frigorifique selon la revendication 2 ou 3, **caractérisée en ce qu'**au moins un plan (E1, E2) est orienté perpendiculairement à l'élément formant paroi (4) ou à l'élément formant plafond (3) et/ou **en ce qu'**un plan (E3) est orienté parallèlement à l'élément formant paroi (4) ou à l'élément formant plafond (3).

5. Carrosserie frigorifique selon l'une des revendications 2 à 4, **caractérisée en ce que** les au moins deux plans (E1, E2, E3) se croisent mutuellement sensiblement à angle droit.

6. Carrosserie frigorifique selon l'une des revendications 1 à 5, **caractérisée en ce que** la cavité (16) est réalisée sous la forme d'un logement, de préférence en forme de rainure.

7. Carrosserie frigorifique selon l'une des revendications 1 à 6, **caractérisée en ce que** le cadre de protection (10) possède au moins un étrier (11), de préférence sensiblement en forme de U, et **en ce que** l'au moins un étrier (11) est accueilli au moins partiellement dans l'au moins une cavité (16).

8. Carrosserie frigorifique selon l'une des revendications 1 à 7, **caractérisée en ce qu'**au moins une traverse (14) se trouve dans la zone d'au moins une arête longitudinale et/ou une arête transversale (15), de préférence recouvrant latéralement l'arête longitudinale et/ou l'arête transversale (15) du caisson (9) de l'unité de contrôle de température (8).

9. Carrosserie frigorifique selon la revendication 8, **caractérisée en ce que** la traverse (14) relie l'un à l'autre deux étriers (11) du cadre de protection (10) qui sont associés aux côtés opposés du caisson (9).

10. Carrosserie frigorifique selon l'une des revendications 1 à 9, **caractérisée en ce que** le cadre de protection (10) et l'unité de contrôle de température (8) sont reliés, notamment fixés par vissage, séparément à l'élément formant paroi (4) et/ou l'élément formant plafond (3).

11. Carrosserie frigorifique selon l'une des revendications 1 à 10, **caractérisée en ce que** le cadre de protection (10) et/ou l'unité de contrôle de température (8) sont montés dans un système de rails de l'élément formant plafond (3) ou de l'élément formant paroi (4).

12. Carrosserie frigorifique selon l'une des revendications 1 à 11, **caractérisée en ce que** la carrosserie frigorifique (1) est réalisée sous la forme d'une structure en coffre.

13. Carrosserie frigorifique selon l'une des revendications 1 à 12, **caractérisée en ce que** l'élément formant paroi (4) et/ou l'élément formant plafond (3) est réalisé sous la forme d'un élément en panneau comprenant des couches de recouvrement externes définissant la structure et une couche centrale disposée entre celles-ci, notamment en matière plastique expansée.

14. Carrosserie frigorifique selon l'une des revendications 1 à 13, **caractérisée en ce que** l'unité de contrôle de température (8) est réalisée sous la forme d'un évaporateur.

15. Carrosserie frigorifique selon l'une des revendications 1 à 14, **caractérisée en ce que** le cadre de protection (10) est réalisé sous la forme d'une protection anti-collision.
